# EUROPEAN PATENT APPLICATION

(11) **EP 4 635 858 A1**
(43) Date of publication of application: **22.10.2025**
(21) Application number: 24171022.7
(22) Date of filing: 18.04.2024
(51) Int. Cl.: B64U 10/13, B64U 20/83, B64U 30/29, H01Q 1/28

(54) **ROTORCRAFT DRONE DEVICE AND METHOD TO OPERATE A ROTORCRAFT DRONE DEVICE**

(71) Applicant: Siemens Aktiengesellschaft, 80333 München (DE)
(72) Inventor: Bhadauria, Shubhangi, 81477 München (DE); Döricht, Volkmar, 80803 München (DE); Michailow, Nicola, 81825 München (DE)
(74) Representative: Siemens Patent Attorneys

(57) **Abstract**

The invention relates to a rotorcraft drone device (1), comprising at least one lifting rotor device (2) and a millimetre-wave communication device (8), wherein the at least one lifting rotor device (2) comprises a motor (5) and a lifting rotor (3), wherein the motor (5) is mechanically coupled to lifting rotor (3), and the millimetre-wave communication device (8) comprises an antenna arrangement (12) and a control device (11) configured to control the antenna arrangement (12). The antenna arrangement (12) comprises at least one antenna device (13) mechanically coupled to the lifting rotor (3), the control device (11) is configured to receive a current rotational position (7) of the lifting rotor (3) and to control the antenna arrangement (12) as a function of the current rotational position (7) of the lifting rotor (3) to set a predefined communication directionality of the antenna arrangement (12) to a predefined communication direction.

## Description

The invention is concerned with a rotorcraft drone device and a method to operate a rotorcraft drone device.

In certain wireless communication networks, a wireless communication link to a communication partner is provided by transceivers. The range of the transceiver depends on the frequency used by the wireless communication network. In particular, the range of millimetre wave communication is somewhat limited. Therefore, a relatively high density of transceivers compared to other frequency ranges such as those used in LTE is required to ensure connectivity between a communication device and the wireless communication network. Some applications require more flexibility. This can be the case, for example, with wireless communication networks in factories.

It is an object of the present invention to provide a solution that improves the coverage of wireless communication networks, especially in wireless communication networks operating in the millimetre-wave frequency range.

This objective is achieved by the subject matter of the independent claims. Further implementations and preferred embodiments are subject matter of the dependent claims.

The invention is based on the idea to integrate a millimetre-wave antenna device into a rotor blade of a drone. The central objective is to maintain a stable and reliable connection with the rotor blade.

A first aspect of the present invention is related to a rotorcraft drone device. The rotorcraft drone device comprises at least one lifting rotor device and a millimetre-wave communication device. The rotorcraft drone device may be designed as a multi copter, especially as a quadro copter. The millimetre-wave communication device may be configured to provide a communication link between the rotorcraft drone device and a specific communication partner.

The at least one lifting rotor device comprises a motor and a lifting rotor. The motor is mechanically coupled to the lifting rotor. The motor is configured to drive the lifting rotor. The motor may be configured to drive a shaft wherein the shaft is mechanically coupled to the rotor device. The lifting rotor comprises rotor blades.

The at least one lifting rotor device is configured to lift the rotorcraft drone device.

The millimetre-wave communication device comprises an antenna arrangement and a control device configured to control the antenna arrangement. In other words, the millimetre-wave communication device comprises antenna devices of the antenna arrangement. The control device may be configured to compute received signals, received by the antenna arrangement and to control the antenna arrangement to send signals via the antenna arrangement.

It is intended that the antenna arrangement comprises at least one antenna device, which is mechanically coupled to the lifting rotor. In other words, the at least one device is directly or indirectly coupled to the lifting rotor. Therefore the at least one antenna device coupled to the lifting rotor rotates with the lifting rotor.

The control device is configured to receive a current rotational position of the lifting rotor and to control the antenna arrangement as a function of the current rotational position of the lifting rotor to set a transmission directionality of the antenna arrangement to a predefined communication direction. In other words, the at least one antenna device of the antenna arrangement is mechanically coupled to the rotating lifting rotor driven by the motor. The rotational position of the antenna device changes according to the changing rotational position of the lifting rotor. Therefore, the current rotational position of the antenna arrangement changes. Because the transmission directionality of the antenna device is the same with respect to the antenna device and the current rotational position of the antenna device changes, the directionality of the antenna device with respect to the rotorcraft drone device. To allow a directing of a transmission directionality of the antenna arrangement to the predefined communication direction, the control device is configured to fetch the current rotational position of the lifting rotor. The control device may be coupled to a motor control device configured to control the motor of the at least one lifting rotor device. A relation of the directionality of the antenna device with regard to the rotorcraft drone device and the current rotational position may be stored in a database or a of the control device. Therefore, the control device may determine the current directionality of the antenna device as a function of the current rotational position of the lifting rotor.

The control device may use the current rotational position to control the antenna arrangement to receive and to transmit signals of the predefined communication direction. It may be possible that the transmission directionality of the antenna arrangement changes with respect to the current rotational position of the lifting rotor. Therefore, the transmission of signals into the predefined communication direction may be limited to respective phases of the rotation when the rotational position is within specific ranges. The control device may be configured to control the antenna device to transmit signals in the predefined communication direction during specific phases of the rotation of the rotor and to suspend the communication during other phases of the rotation of the rotor.

The radiation direction of the drone may depend on a position of the at least one antenna device of the rotorcraft drone apparatus. The rotorcraft drone device may have a main plane, which may be a horizontal plane when the rotorcraft drone device is flying. The radiation direction may be directed downwards, upwards or sideways with respect to the main plane of the rotorcraft drone device. In particular, the rotorcraft drone device may be configured such that the radiation direction is downwards and/or sideways relative to the main plane to provide a communication link to devices operating below the rotorcraft drone device.

The embodiment has the advantage that the change of the orientation of the antenna device, caused by the rotation of the rotor device may be used to improve a directionality of the antenna arrangement.

According to a further aspect of the present invention, the at least one antenna device is arranged on or in a rotor blade of the lifting rotor. In other words, the at least one lifting rotor device comprises rotor blades. In at least one of the rotor blades, the at least one antenna device is arranged. It may be possible that only one of the rotor blades comprises the antenna device or that multiple of the rotor blades comprise respective antenna devices. The antenna device may be arranged inside the respective rotor blade or on a surface of the respective rotor blade.

According to a further embodiment of the present invention, the at least one antenna device is designed as a planar antenna. In other words, the integration of the at least one antenna device into the rotor blade of the rotorcraft drone device comprises designing the antenna device as a planar antenna. This embodiment requires special materials and manufacturing technologies to ensure that the antenna device functions properly and withstands mechanical stresses. The embodiment has the advantage that a flat antenna may easily attached on a surface of the drone blade.

According to a further embodiment of the present invention, the at least one antenna device is designed as a printed circuit board antenna. In other words, the at least one antenna device is designed as a flat printed circuit board comprising multiple layers of conductive traces and insulation materials. The embodiment has the advantage the printed circuit board antenna is very thin and lightweight and can be easily glued to the surface of the rotor blade without significantly affecting the aerodynamics or weight of the drone.

According to further embodiment of the invention, the at least one antenna device is designed as a phased array antenna comprising antenna units arranged on or in the rotor blade. In other words, an approach of the embodiments to use a phased array antenna design for the antenna device, where several small antenna units are mounted on the surface of the rotor blade and connected together in a specific way to produce a highly directional signal. This type of antenna device is very flexible and can be arranged in different configurations and shapes to achieve optimal signal quality and performance. The phased antenna should be arranged in such a way that directional beams of the antenna units are always superimposed to form a stronger and wider resulting beam. One criteria could be setting the right rotation angle so that the spatial correlation between the different antenna units can be minimized

According to a further embodiment of the present invention, the at least one antenna device is attached to the rotor outside the rotor blade. In other words, the rotor comprises the antenna device wherein the antenna device is arranged at the lifting rotor but outside the rotor blades. An option would be to attach an external millimetre-wave antenna to the drone that rotates with the rotor blades. This would make it easier to integrate the antenna device and provide more flexibility in the orientation of the antenna device. However, this could result in increased drag and weight of the drone.

According to a further embodiment of the invention the at least one antenna device is arranged in an antenna housing attached to the lifting rotor. In other words, the lifting rotor comprises the antenna housing wherein the antenna housing is designed to house the antenna device. It may be possible that the antenna housing comprising the antenna device is arranged on a shaft of the rotor. An option would be to attach a millimetre-wave antenna to the drone in a special housing or bracket that rotates with the rotor blades. This would facilitate integration of the antenna device and provide good performance with low drag and weight.

According to a further embodiment of the invention, the rotorcraft drone device is configured to operate in a static mode, wherein operation of the at least one lifting rotor for lifting the rotorcraft drone device is deactivated. In other words, the rotorcraft drone device is capable of operating in a static mode. When in static mode, the rotorcraft drone device is not flying but is on the ground or attached to an object. Since the rotorcraft drone device is not flying, it does not need to operate the at least one lifting rotor. Therefore, the control device instead of the rotor control device controls the lifting rotor device comprising the at least one antenna device. The control device is configured to control the at least one lifting rotor device to rotate the lifting rotor as a function of the communication direction. In other words, since the lifting rotor does not rotate, the control device may control the at least one lifting rotor device comprising the at least one antenna device to set the lifting rotor to the current rotational position as a function of the communication direction. For example, the control device may control the lifting rotor device to set the antenna device on the lifting rotor to the rotational position in which a main transmission direction of the antenna device is oriented towards the communication direction. The embodiment has the advantage that the rotor device can be positioned at predefined rotational positions to improve a transmission of the communication link.

According to a further embodiment of the invention, the rotorcraft drone device is configured to control the at least one lifting rotor device to set a longitudinal position of the at least one rotor blade of the lifting rotor comprising the antenna device as a function of the communication direction. In other words, the at least one rotor blade may be rotatable about its longitudinal axis. When the rotorcraft drone device is operated in static mode, the control device may control the lifting rotor device to set the longitudinal position in which a main transmission direction of the antenna device is oriented towards the communication partner. Adjusting the rotational position of the lifting rotor may not be sufficient for the communication link. Therefore, the embodiment has the advantage that by adjusting the longitudinal position, the orientation of the antenna device can be brought closer to the communication direction.

According to a further embodiment of the invention, the rotorcraft drone device comprises a holder device configured to hold the drone during the static mode. In other words, the rotorcraft drone device is configured to be attached to a corresponding device using the holder device to remain in a predefined position when in the static mode. The device may comprise a hook, a suction cup and/or a magnet. The embodiment has the advantage that the operation of the rotorcraft drone device in static mode is not limited to horizontal surfaces.

According to a further embodiment of the invention, the control device is configured to control the antenna arrangement as a function of an expected Doppler effect caused by a movement of the rotorcraft drone device relative to a partner and/or caused by a movement of the at least one rotor. In other words, the controller is configured to estimate the effect of the Doppler effect on signals transmitted to or from a communication partner of the rotorcraft drone device. For example, the control device may determine a position of the communication partner relative to the rotorcraft drone device. The control device may determine a movement of the communication partner relative to the rotorcraft drone device by monitoring a change in the position of the communication partner and/or by monitoring a change in the position of the rotorcraft drone device. Based on the relative motion, the control device may estimate the Doppler effect which affects the respective signals. The control device may adjust the signals provided by the antenna device and/or received by the antenna device. The control device may also be configured to determine the Doppler effect caused by the motion of the antenna device located on the rotating rotor blade. In order to compensate for the Doppler effect, the control device may change a frequency of the signal transmitted by the antenna device as a function of the rotational movement of the antenna device on the rotor blade.

According to a further embodiment of the invention the millimetre-wave communication device is configured to establish the directed millimetre-wave communication link according to 5G standard.

According to a further embodiment of the invention the millimetre-wave communication device is configured to establish the directed millimetre-wave communication link according to Wi-Fi standard.

A second aspect of the present invention is related to a method to operate a rotorcraft drone device.

The rotorcraft drone device comprises at least one lifting rotor device and a millimetre-wave communication device. The at least one lifting rotor device comprises a motor and a lifting rotor, wherein the motor is mechanically coupled to lifting rotor. The millimetre-wave communication device comprises an antenna arrangement and a control device configured to control the antenna arrangement. The antenna arrangement comprises at least one antenna device mechanically coupled to the lifting rotor.

The method comprises a step of determining a predefined communication direction by the control device. A next step comprises a reception of a current rotational position of the lifting rotor by the control device. A next step comprises a controlling of the antenna arrangement as a function of the current rotational position of the lifting rotor to set a transmission directionality of the antenna arrangement to the predefined communication direction.

The control device may comprise a computing unit. The computing unit may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

The invention also encompasses combinations of the features of the described embodiments. Thus, the invention also encompasses realizations each having a combination of the features of more than one of the described embodiments, provided that the embodiments have not been described as mutually exclusive.

For use cases or use situations which may arise in the method and which are not explicitly described here, it may be provided that, in accordance with the method, an error message and/or a prompt for user feedback is output and/or a default setting and/or a predetermined initial state is set.

Independent of the grammatical term usage, individuals with male, female or other gender identities are included within the term.

Examples of embodiments of the invention are described below. For this purpose, the drawings show in
Fig. 1 a schematic illustration of a rotorcraft drone device;
Fig. 2 a schematic illustration of a rotorcraft drone device operated in a static mode; and
Fig. 3 a schematic illustration of a method to operate a rotorcraft drone device.

The following embodiments represent preferred examples of the present invention.

In the figures the same elements are indicated by the same reference signs.

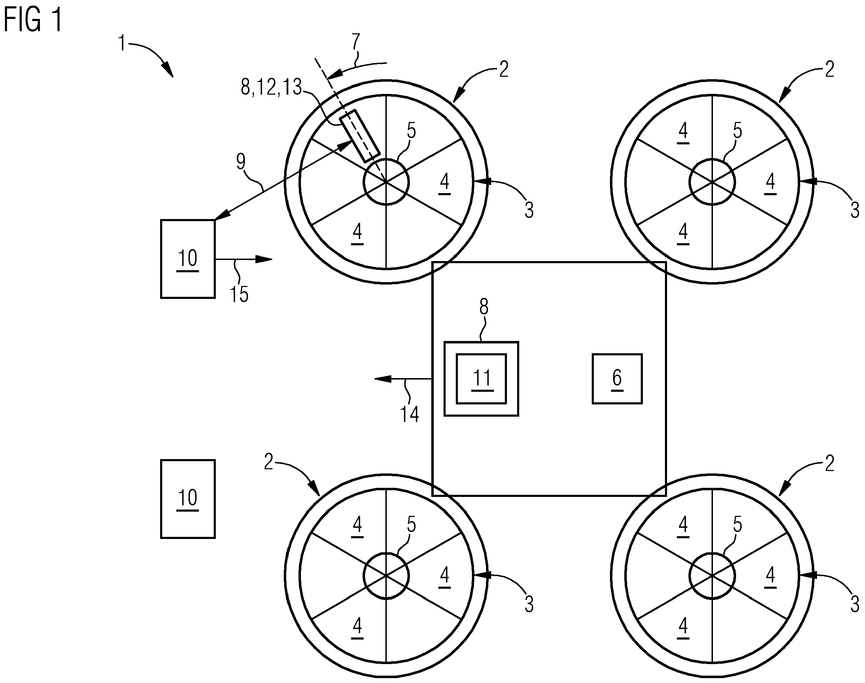

Fig. 1 shows a schematic illustration of a rotorcraft drone device.

The rotorcraft drone device 1 may comprise at least one lifting rotor device 2. The rotorcraft drone device 1 shown in Fig. 1 may be designed as a quadro copter comprising four of the lifting rotor devices 2. The respective lifting rotor devices 2 may comprise a respective lifting rotor 3 comprising rotor blades 4 and a motor 5 configured to drive the lifting rotor 3. The rotorcraft drone device 1 may comprise a rotor control device 6 configured to control the motors 5 of the rotor devices 2. During an operation of the rotor devices 2, the lifting rotors 3 may rotate. Because the lifting rotors 3 rotate during operation, a rotational position 7 of the lifting rotor 3 changes.

The rotorcraft drone device 1 may comprise a millimetre-wave communication device 8. The millimetre-wave communication device 8 may be configured to establish a communication link 9 to another communication device 10 outside the rotorcraft drone device 1. The millimetre-wave communication device 8 may comprise a control device 11 and an antenna arrangement 12 comprising at least one antenna device 13. The at least one antenna device 13 may be mechanically coupled to the lifting rotor 3 of one of the rotor devices 2.

As an example, the antenna device 13 may be arranged at a respective one of the rotor blades 4. The antenna device 13 may be designed as a flat antenna or as a printed circuit board antenna. The antenna device 13 may have a specific transmission directionality describing the transmission of the antenna device 13 in a surrounding of the antenna device 13 related to the antenna device 13. As the antenna device 13 is mechanically coupled to the lifting rotor 3, the orientation of the antenna device 13 may depend on the current rotational position 7 of the respective lifting rotor 3. In other words, the transmission directionality of the respective antenna device 8 with reference to the rotorcraft drone device 1 changes as a function of the current rotational position 7 of the respective lifting rotor 3. To establish the communication link 9 between the millimetre-wave communication device 8 and one of the communication partners 10 at a respective position related to the rotorcraft drone device 1, the control device 8 may be configured to control the antenna arrangement 12 as a function of the current rotational position 7 of the lifting rotor 3. It may be possible that the control device 8 is configured to receive the current rotational position 7 from the rotor control device 6 and to determine the current transmission directionality of the antenna device 8 related to the rotorcraft drone device 1.

It may be possible that the establishment of the communication link 9 to the communication partner 10 is only possible during specific phases of the rotation of the rotor device 3, when the antenna device 13 is oriented within a necessary orientation range with respect to the communication partner 10. Therefore, transmission between the millimetre-wave communication device 8 and the communication partner 10 may be restricted to the specific phases. It may be possible that during the specific phase the millimetre-wave communication device 8 may communicate with a first of the communication partners 10 and suspend the communication with that first communication partner during other phases. It may be possible that during another phase the millimetre-wave communication device 8 communicates with a second communication partner 10.

During communication between the rotorcraft drone device 1 and the communication partner 10 via the communication link 9, the communication partner 10 may perform a motion 15. The rotorcraft drone device 1 may also perform a motion 14. Therefore, the signals of the communication link 9 may be affected by the Doppler effect. The Doppler effect may also be caused by the rotation of the antenna device 13 on the rotor blade 4. The control device 11 may be configured to estimate the Doppler effect and to adjust the signals to be transmitted to the communication partner 10 by means of signal processing. The control device 11 may also be configured to adjust the signals received from the communication partner 10 by means of signal processing. To estimate the Doppler effect, the control device 11 may be configured to track a current position of the rotorcraft drone device 1 and the position of the communication partner 10. The estimation and compensation of the Doppler effect by means of signal processing may be considered in the design of the communication signal comprising a frame structure, reference signals, etc. and a radiation pattern of the antenna device 13.

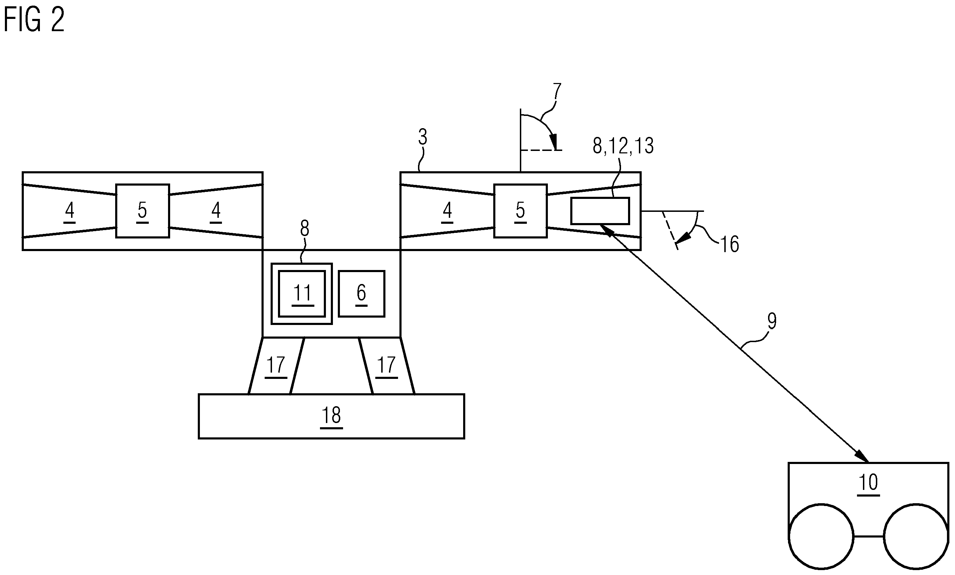

Fig. 2 shows a schematic illustration of a rotorcraft drone device operated in a static mode.

The rotorcraft drone device 1 may be configured to fly to a predefined position to improve a coverage of the wireless network device from the predefined position. The predefined position may be situated on a platform 18 mounted at a wall in a factory. The rotorcraft drone device 1 may fly to the platform 18 and land on the platform using its holding device 17. After landing on the platform 18, the rotorcraft drone device 1 may activate a static mode. When the static mode is set, operation of the lifting rotor devices 2 to lift the rotorcraft drone device 1 may be terminated. The rotor control device 6 may pause its operation of the lifting rotor devices 2. Instead, the lifting rotor devices 2 may be controlled by the control device 11 to provide a communication link 9 between the rotorcraft drone device 1 and the communication partner 10. Therefore, the control device 11 may locate the communication partner 10 and control the lifting rotor device 2 to set the current rotational position 7 of the lifting rotor 3 and a current longitudinal position 16 of the rotor blade 4comprising the antenna device 13 as a function of the transmission direction towards the communication partner 10. During communication between the rotorcraft drone device 1 and the communication partner 10, the control device 11 may adapt the current rotational position 7 and/or the current longitudinal position of the rotor blade 16 as a function of the direction towards the communication partner 10. When the rotorcraft drone device 1 comprises a plurality of the rotor blades 4 comprising respective antenna devices 13, the control device 11 may control the lifting rotor devices 2 to be arranged at respective communication partners 10.

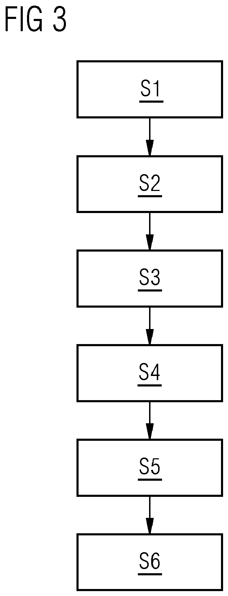

Fig. 3 shows a schematic illustration of a method to operate a rotorcraft drone device.

The method shown in Fig. 3 may be performed with the rotorcraft drone device 1 shown in Fig. 1 and/or Fig. 2.

In a step S1 the control device 11 of the millimetre-wave communication device 8 may receive a position of a communication partner 10. The position may be received via a second communication network.

In a step S2 the control device 1 of the millimetre-wave communication device 8 may determine a direction of the communication partner 10 with respect to the rotorcraft drone device 1 based on the position of the communication partner 10 and a position of the rotorcraft drone device 1.

In a step S3 the control device 1 of the millimetre-wave communication device 8 may receive a current rotor position 7 of a lifting rotor 3 of a lifting rotor device 2 from a motor control device 6, configured to control the motor 5 of the respective lifting rotor device 2.

In a step S4 the control device 1 of the millimetre-wave communication device 8 may determine a current directivity of the antenna arrangement 12 comprising an antenna device 12 on a rotor blade 4 of the lifting rotor device 2 as a function of the current rotor position 7 of a lifting rotor 3.

In a step S5 the control device 1 of the millimetre-wave communication device 8 may determine ranges of the current rotor position 7 that allow an establishment of the communication link 9 between the millimetre-wave communication device 8 and the communication partner 10.

In a step S6 the control device 1 of the millimetre-wave communication device 8 may determine whether the current rotor position 7 is within the range. If the current rotor position 7 is within the range, the control device 1 of the millimetre-wave communication device 8 may control the antenna arrangement to exchange data via the communication link 9 between the millimetre-wave communication device 8 and the communication partner 10. Otherwise, the control device 1 of the millimetre-wave communication device 8 may suspend the transmission until the current rotor position 7 reaches the range.

The steps may be performed for respective communication partners 10. It may be possible that respective ranges are assigned to respective communication partners 10.

One of the biggest advantages would be improved directional control and higher coverage area. The antenna's rapid rotation would allow it to quickly and accurately direct signals in different directions, which is especially beneficial for applications such as wireless broadband Internet access and cellular networks. The advantages in detail are as follows: Improved directional control: the antenna's fast rotation could direct signals more accurately in different directions, further improving connectivity and signal quality. Higher transmission speeds: The higher rotation speed would allow the antenna to switch back and forth between different receivers more quickly, enabling higher transmission speeds. Larger coverage: Due to the fast rotation, the antenna could cover a larger area and thus increase the range of the signal.

## Claims

1. Rotorcraft drone device (1), comprising at least one lifting rotor device (2) and a millimetre-wave communication device (8), wherein
- the at least one lifting rotor device (2) comprises a motor (5) and a lifting rotor (3), wherein the motor (5) is mechanically coupled to lifting rotor (3),
- the millimetre-wave communication device (8) comprises an antenna arrangement (12) and a control device (11) configured to control the antenna arrangement (12),
**characterised in that**
- the antenna arrangement (12) comprises at least one antenna device (13) mechanically coupled to the lifting rotor (3),
- the control device (11) is configured to receive a current rotational position (7) of the lifting rotor (3) and to control the antenna arrangement (12) as a function of the current rotational position (7) of the lifting rotor (3) to set a transmission directionality of the antenna arrangement (12) to a predefined communication direction.

2. Rotorcraft drone device (1) according to claim 1,
**characterised in that**
the at least one antenna device (13) is arranged on or in a rotor blade (4) of the lifting rotor (3).

3. Rotorcraft drone device (1) according to claim 1 or 2,
**characterised in that**
the at least one antenna device (13) is designed as a planar antenna.

4. Rotorcraft drone device (1) according to claim 1 or 2,
**characterised in that**
the at least one antenna device (13) is designed as a printed circuit board antenna.

5. Rotorcraft drone device (1) according to claim 1 or 2,
**characterised in that**
the at least one antenna device (13) is designed as a phased array antenna comprising antenna units arranged on or in the rotor blade (4).

6. Rotorcraft drone device (1) according to claim 1,
**characterised in that**
the at least one antenna device (13) is attached to the rotor.

7. Rotorcraft drone device (1) according to claim 1,
**characterised in that**
the at least one antenna device (13) is arranged in an antenna housing attached to the rotor.

8. Rotorcraft drone device (1) according to any one of the preceding claims,
**characterised in that**
- the rotorcraft drone device (1) is configured to operate in a static mode, wherein an operation of the at least one lifting rotor device (2) for a lifting of the rotorcraft drone device (1) is deactivated, and
- the control device (11) is configured to control the at least one lifting rotor device (2) to set the lifting rotor (3) to the current rotational position (7) as a function of the predefined communication direction.

9. Rotorcraft drone device (1) according to claim 8,
**characterised in that**
the control device (11) is configured to control the at least one lifting rotor device (2) to set a current longitudinal position (16) of the rotor blade (4) as a function of the predefined communication direction.

10. Rotorcraft drone device (1) according to any one of the claims 8 or 9,
**characterised in that**
the rotorcraft drone comprises a holder device (17), configured to hold the rotorcraft drone device (1) during the static mode.

11. Rotorcraft drone device (1) according to any one of the preceding claims,
**characterised in that**
the control device (11) is configured to control the antenna arrangement (12) as a function of an expected Doppler-effect, caused by a motion of the rotorcraft drone device (1) relative to the communication partner (10) and/or caused by a motion of the at least one lifting rotor (3) comprising the antenna device (13).

12. Rotorcraft drone device (1) according to any one of the preceding claims,
**characterised in that**
the millimetre-wave communication device (8) is configured to establish the directed millimetre-wave communication link (9) according to 5G standard.

13. Rotorcraft drone device (1) according to any one of the preceding claims,
**characterised in that**
the millimetre-wave communication device (8) is configured to establish the directed millimetre-wave communication link (9) according to Wi-Fi standard.

14. Method to operate a rotorcraft drone device (1), comprising at least one lifting rotor device (2) and a millimetre-wave communication device (8), wherein
- the at least one lifting rotor device (2) comprises a motor (5) and a lifting rotor (3), wherein the motor (5) is mechanically coupled to lifting rotor (3),
- the millimetre-wave communication device (8) comprises an antenna arrangement (12) and a control device (11) configured to control the antenna arrangement (12), and
the antenna arrangement (12) comprises at least one antenna device (13) mechanically coupled to the lifting rotor (3),
comprising the following steps performed by the control device (11):
- receiving a current rotational position (7) of the lifting rotor (3), and
- controlling the antenna arrangement (12) as a function of the current rotational position (7) of the lifting rotor (3) to set a transmission directionality of the antenna arrangement (12) to a predefined communication direction.
